Europäisches Patentamt

European Patent Office

Office européen des brevets

(11) Numéro de publication: **0 378 280**

**A1**

## (12) DEMANDE DE BREVET EUROPEEN

(21) Numéro de dépôt: 90200081.9

(22) Date de dépôt: **12.01.90**

(51) Int. Cl.⁵: **B23H 7/04, B23H 7/06**

(30) Priorité: **13.01.89 CH 99/89**

(43) Date de publication de la demande:
**18.07.90 Bulletin 90/29**

(84) Etats contractants désignés:
**DE ES FR GB IT SE**

(71) Demandeur: **CHARMILLES TECHNOLOGIES S.A.**
**8-10, rue du Pré-de-la-Fontaine**
**CH-1217 Meyrin 1(CH)**

(72) Inventeur: **Bosson, Jean-Michel**
**Chemin de Pralets, Le Pas de l'Echelle**
**F-74010 Annemasse(FR)**
Inventeur: **Blondin, Daniel**
**36A Chemin des Saules**
**CH-1233 Bernex(CH)**
Inventeur: **Odriozola, Juan**
**5, Chemin du Petit-Bois**
**CH-1219 Châtelaine(CH)**
Inventeur: **Marendaz, Georges-André**

**Borex(CH)**

(74) Mandataire: **Hugelin, Christiane**
**c/o CHARMILLES TECHNOLOGIES SA Case postale 373**
**CH-1217 Meyrin 1(CH)**

(54) **Dispositif et procédé pour contrôler la variation d'un paramètre en électroérosion avec un fil-électrode.**

(57) On fait varier au moins un paramètre d'usinage d'une machine découpant par électroérosion avec un fil-électrode, selon une trajectoire prédéterminée, lorsque le fil-électrode atteint le sommet d'un angle ou aborde un arc. Le procédé comporte les étapes suivantes :

1) calcul des endroits de la trajectoire où doivent être enclenchées ces variations;

2) arrêt du mouvement relatif entre le fil-électrode et la pièce à usiner lorsque le fil atteint l'un de ces endroits;

3) variation graduelle et par paliers du paramètre jusqu'à une valeur finale désignée ou jusqu'à ce qu'un nombre prédéterminé de paliers ait été effectué ou pendant un laps de temps donné;

4) reprise du mouvement relatif fil-pièce, avec la nouvelle valeur du paramètre sur une distance prédéterminée par le calcul, et

5) variation du paramètre en sens inverse afin de le ramener à sa valeur initiale. Les durées des paliers sont prédéterminées ou correspondent à la découpe de longueurs prédéterminées le long de la trajectoire.

Fig. 2

# DISPOSITIF ET PROCEDE POUR CONTROLER LA VARIATION D'UN PARAMETRE EN ELECTROEROSION AVEC UN FIL-ELECTRODE

La présente invention a trait à un dispositif et à un procédé de contrôle d'une machine d'électroérosion pour découper avec un fil-électrode faisant appel à la modification automatique, à certains moments de l'usinage, d'au moins un paramètre d'usinage.

Divers procédés ont été proposés dans l'état de la technique pour contrôler l'usinage par électroérosion en régulant automatiquement certains paramètres d'usinage, en particulier afin d'éviter la rupture du fil ou de pallier les défauts apparaissant lors de la découpe dans les angles (angles vifs rentrant ou sortant, ou sections convexes ou concaves présentés par la trajectoire à découper).

La plupart de ces procédés connus font appel à une régulation de la vitesse d'usinage, par exemple le brevet suisse 590.107, le brevet US 4.703.143 , la publication EP 67 876, les demandes japonaises publiées sous les No 51-85589 et 58-40229. Toutefois, de nombreuses demandes japonaises, en particulier la publication 57-41129, décrivent une méthode selon laquelle on maintient au contraire une vitesse d'usinage constante en faisant varier la puissance des décharges proportionnellement à la variation de la surface d'érosion (due à une découpe dans un angle, à une variation d'épaisseur de la pièce ou à toute autre variation de la surface ou de la quantité de matière à éroder), afin de maintenir une densité d'énergie d'usinage donnée.

Mais aucune de ces méthodes ne diminuant le défaut apparaissant juste après le sommet des angles, le brevet suisse 654.233 recommande de diminuer la vitesse d'usinage aussi avant d'atteindre un sommet à angle vif et de conserver une vitesse d'usinage réduite pendant un intervalle de temps prédéterminé après l'avoir dépassé.

Selon la plupart des méthodes connues, la régulation de la vitesse d'usinage est réalisée
- soit progressivement et sans interrompre l'avance du fil,
- soit en arrêtant cette avance et en une seule étape.

Il a par exemple été proposé de modifier cette vitesse
- progressivement et pendant un intervalle de temps donné (CH 654.233) ou sur une longueur prédéterminée de la trajectoire parcourue (JP 58-40229), tout en maintenant l'avance du fil,
- ou en arrêtant cette avance, et en modifiant en une seule étape la vitesse ou le régime et en usinant pendant une durée prédéterminée, à régime réduit et usinage stationnaire dans le cas d'un angle, ou en usinant à vitesse réduite dans le cas d'un arc; cette vitesse ou cette durée est calculée en fonction de la flèche du fil en ligne droite qui est déterminée en arrêtant l'usinage (EP 67 876), ou cette durée est celle demandée pour la disparition de la flèche (US 4 703 143).

Aucune de ces publications ne mentionne qu'il est avantageux de faire varier la vitesse ou le régime progressivement même lorsqu'on réalise cette variation en usinage stationnaire. Il semble que l'homme de l'art s'attendait à ce que des modifications graduelles d'un paramètre alors que l'avance du fil était arrêtéedemanderait trop de temps et augmenterait donc trop la durée del'usinage. C'est pourquoi , surtout dans le cas d'usinage à grande vitesse, l'état de la technique, par exemple le brevet US 4 725 706, préconise des changements de régime brutaux et n'associe jamais l'arrêt de l'avance à une variation graduelle simultanée d'un paramètre.

Le but de la présente invention est une régulation automatique d'au moins un paramètre d'usinage, permettant d'usiner plus rapidement qu'avec les méthodes connues tout en évitant les courts-circuits ou la rupture du fil et en obtenant de bonnes précisions dans les angles des pièces usinées. Cette régulation doit permettre d'obtenir une géométrie satisfaisante, que la trajectoire présente des courbes convexes ou concaves ou des lignes brisées avec des angles rentrants ou sortants.

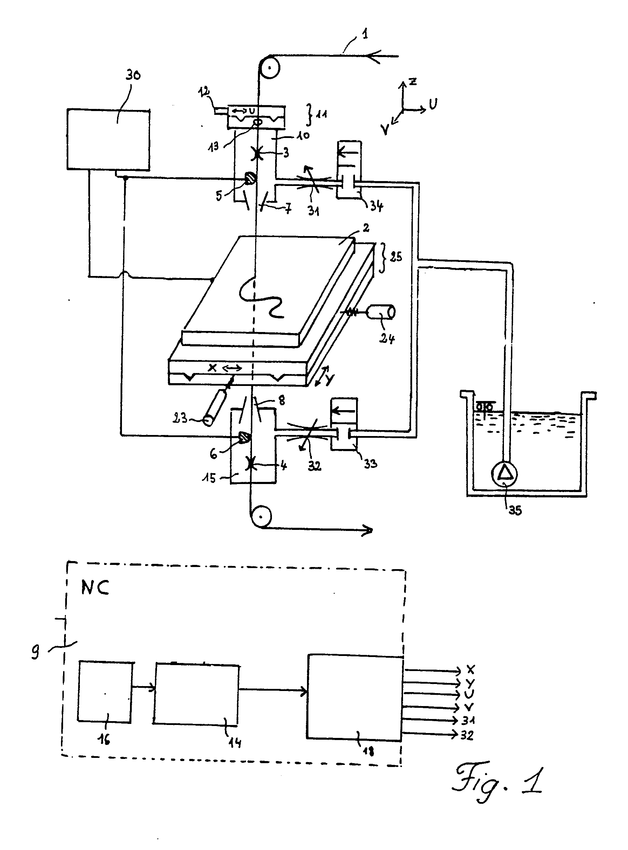

Rappelons brièvement le fonctionnement d'une machine à découper par électroérosion avec un fil-électrode, telle par exemple que celle illustrée à la figure 1 :
- un fil-électrode 1 défile en continu entre deux guides-fil 3 et 4 disposés de part et d'autre de la pièce 2 à usiner, grâce à des mécanismes (non représentés) entraînant le fil tout en le freinant de manière à lui donner une tension mécanique prédéterminée. Deux contacts frottants 5 et 6 amènent au fil-électrode le courant d'usinage émis par un générateur d'impulsions 30, tandis que deux buses d'injection 7 et 8 dirigent des jets de liquide d'usinage le long du fil 1 et dans la fente découpée dans la pièce 2 par ce dernier.
- Le guide-fil 3, la buse 7, et le contact 5 supérieurs sont disposés dans une tête d'usinage 10 mobile selon l'axe vertical Z, et en général, mobile également (selon des courses relativement petites) dans un plan horizontal, selon deux axes orthogonaux U et V, ce qui permet d'incliner le fil, le guide-fil inférieur 4 restant fixe. Ce mouvement (U, V) est réalisé grâce à une table à mouvements croisés 11, actionnée par un servo-mécanisme (de type connu, non représenté) comportant les deux moteurs 12 et 13. La tête d'usinage inférieure 15 contenant le guide-fil 4, la buse 8 et le contact 6 inférieurs reste fixe par rapport au bâti de la machine.

- La pièce 2 à usiner est fixée grâce à un mécanisme non représenté sur une table fixée elle-même sur le fond d'un bac de travail (non représenté) rempli de liquide d'usinage. Ce dernier est mobile selon deux axes horizontaux et orthogonaux X et Y grâce à une table à mouvements croisés 25, actionnée par un servo-mécanisme (de type connu, non représenté) comportant les deux moteurs 23 et 24.

- La trajectoire de découpe est mémorisée sur un support d'information 16 qui transmet ses données à l'unité de calcul 14 d'une commande numérique 9. Cette dernière comporte également une unité programmée de façon appropriée, au moins une mémoire et un lecteur, ainsi qu'une installation 18 (processeur ou interpolateur) contrôlant et commandant les déplacements relatifs entre la pièce-électrode 2 et le fil-électrode 1 en actionnant les moteurs 12, 13, 23 et 24, ainsi que d'autres paramètres d'usinage, telle la pression d'injection du liquide d'usinage en agissant sur les électrovannes 31 et 32. L'unité de calcul 14 évalue la trajectoire de découpe et transmet des signaux de commande à l'interpolateur 18 destiné à répartir les déplacements suivant les deux directions X et Y actionnés par les deux moteurs 23 et 24.

- Le générateur d'impulsions 30 est connecté entre les deux électrodes 1 et 2 de manière à émettre des impulsions de tension successives destinées à amorcer des décharges dans la zone d'usinage. Il reçoit des signaux de la commande numérique 9 (liaison non représentée) pour commander, par exemple, une variation de valeur donnée de la fréquence des impulsions, ou de la tension ou de la durée des étincelles.

- Un réservoir de liquide diélectrique alimente le bac de travail et les circuits d'injection vers les buses 7 et 8 des têtes d'usinage. Ces circuits sont schématisés à la figure 1 par la pompe 35 et les électro-vannes 31 et 32 reliées aux distributeurs de liquide 33 et 34.

Le but mentionné précédemment est réalisé en utilisant la stratégie suivante pour faire varier de façon progressive le paramètre à modifier, cette modification étant, par exemple, une diminution :

- on arrête le mouvement relatif entre fil et pièce mais le générateur continue à envoyer des impulsions dans le fil;

- on diminue la valeur V du paramètre à modifier, par exemple la fréquence des impulsions émises par le générateur, d'une quantité $Q_1$ donnée;

- au bout d'un délai de durée $\Delta t_1$ prédéterminée on diminue à nouveau d'une quantité $Q_2$ ce paramètre;

- au bout d'un nouveau délai $\Delta t_2$ on le diminue de $Q_3$ et ainsi de suite jusqu'à réduire ce paramètre à la valeur $V'$, après avoir procédé par n décréments;

- on remet en route le mouvement relatif entre fil et pièce; le paramètre modifié étant en général un facteur de la puissance des décharges, sa réduction entraîne dans ce cas une diminution de la vitesse d'avance, réalisée automatiquement par les servo-mécanismes actionnant le mouvement relatif;

- on usine à ce régime réduit sur une distance $l_0$ de la trajectoire;

- ensuite sans qu'il soit nécessaire d'arrêter le mouvement relatif, on augmente la valeur du paramètre d'une quantité $Q'_1$ donnée;

- au bout d'un délai $\Delta t'_1$ on l'augmente d'une quantité $Q'_2$ et ainsi de suite en procèdant par $n'$ augmentations successives;

- lorsque le paramètre a de nouveau la valeur V, on poursuit l'usinage avec le régime de départ.

On a procédé ainsi à une double variation progressive par paliers du régime d'usinage. On peut utiliser la même stratégie pour augmenter un paramètre en usinage stationnaire, (la tension mécanique du fil, par exemple), et le ramener à sa valeur initiale en le diminuant tout en ayant rétabli l'avance du fil (usinage dynamique ).

Les durées de ces paliers sont prédéterminées. Elles peuvent être constantes pour plusieurs paliers successifs , ou bien varier selon une fonction préétablie . Dans le cas de la phase de variations réalisée en usinage dynamique , elles peuvent correspondre à la découpe de longueurs prédéterminées le long de la trajectoire. On a, par exemple, $\Delta t_1 = \Delta t_2 = \Delta t$.

Les quantités $Q_1,..., Q_x$ et $Q'_1,..., Q'_x$ peuvent être égales, mais sont en général différentes pour chacun des décréments et incréments réalisés; de préférence, $Q_{x+1} < Q_x$ et $Q'_{x+1} > Q_x$.

L'objet de la présente invention est donc un dispositif tel que défini à la revendication 1.

Lorsque la durée des paliers de la phase de variation en usinage dynamique, (dans laquelle on ramène le paramètre à sa valeur initiale après usinage de l'angle ou de l'arc), correspond aux temps mis par le fil pour usiner des longueurs prédéterminées de trajectoire , le dispositif comporte aussi un organe agencé pour envoyer un signal vers l'élément de commande numérique dés que le fil a découpé une longueur prédéterminée , depuis un endroit donné de la trajectoire ou depuis un moment donné. Cet endroit ou moment correspond , par exemple , au début de cette phase d'usinage dynamique ou au début d'un palier, c'est-à-dire à la dernière variation élémentaire du paramètre.

C'est également un procédé de commande (ou de contrôle) d'une machine à découper par électroéro-

3

sion tel que défini à la revendication 7.

Comme dans le brevet CH 654.233, le dispositif de la présente invention permet de modifier graduellement un paramètre ayant une influence sur la géométrie, telle la fréquence des impulsions émises par le générateur, et de mesurer la tension moyenne d'usinage. Mais,

- au lieu de diminuer le paramètre en continuant à faire avancer le fil, on réalise cette variation en régime stationnaire. Il n'est donc plus nécessaire de corriger la vitesse d'avance en fonction des valeurs successives de la tension moyenne d'usinage, de façon à maintenir constante la distance d'étincelage, puisque l'avance est nulle;

- au lieu de réduire la vitesse d'avance déjà à l'approche du sommet d'un angle, la vitesse d'avance n'est réduite qu'après le sommet.

De façon surprenante, cette manière de procéder en interrompant l'avance du fil et en faisant varier par paliers les conditions d'usinage en régime stationnaire, permet de réduire de manière significative les durées de l'usinage d'un angle ou d'un arc avec variation automatique des paramètres, par rapport aux usinages menés selon une procédure faisant appel à une variation réalisée pendant l'avance du fil.

Le paramètre V est en général l'un des facteurs du régime d'usinage, en particulier de la puissance des impulsions émises par le générateur, telle la fréquence de ces impulsions, l'intensité du courant d'usinage, le temps d'étincelle ou la tension d'étincelle. Sa variation peut s'accompagner de celle d'un ou de plusieurs autres paramètres, par exemple d'une variation de la pression d'injection du liquide ou/et de la tension mécanique du fil ou/et de la vitesse de défilement de ce dernier. Ceci permet en particulier de renforcer l'action de la diminution de fréquence des impulsions sur la flèche du fil.

Les quantités dont on fait varier le(s) paramètre(s) V à chaque palier ainsi que le nombre de ces paliers ou la durée de l'ensemble des paliers d'une variation dans un sens donné, ou la valeur $V'$ finale atteinte par le(s) paramètre(s) avant de découper un angle, les durées $\Delta t_x$ et $\Delta t'_x$ des paliers ou les longueurs $\Delta l$ ont été, par exemple, prédéterminées expérimentalement, en choisissant les valeurs donnant une géométrie satisfaisante pour la pièce, avec une découpe d'un arc ou d'un angle la plus rapide possible, tout en évitant les courts-circuits.

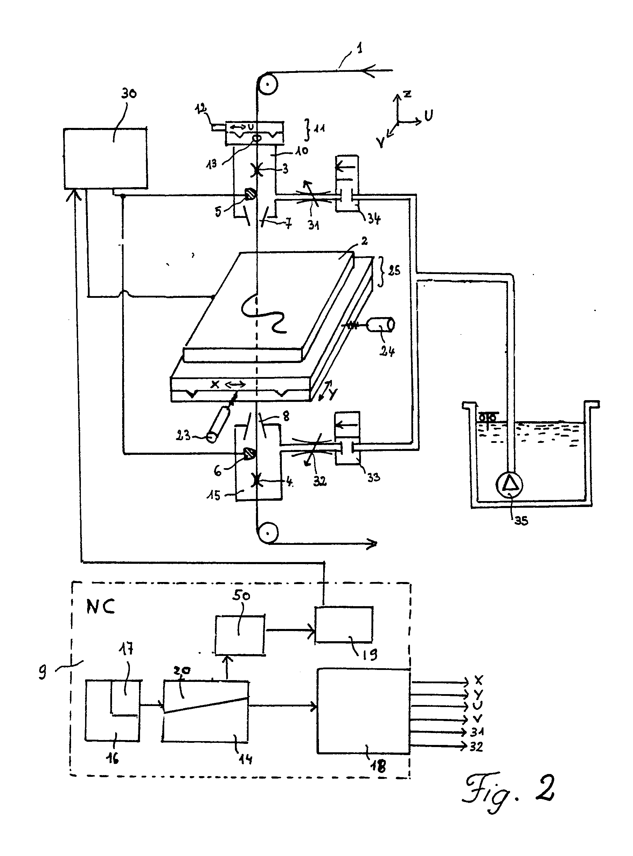

Ces valeurs sont en général mémorisées sur un élément approprié 17 (voir figure 2) du support d'information 16 relié à l'unité de calcul 14 de la commande numérique 9 de la machine EDM. Elles sont fonction du couple matériau de la pièce et du fil , et/ou de la hauteur de la pièce , et/ou du matériau et/ou de la géométrie du fil-électrode.

Dans le cas de la découpe d'un arc, plus le rayon de courbure est grand, moins il sera nécessaire de diminuer le régime et donc le paramètre afin d'obtenir une bonne géométrie. Il est possible de s'arrêter à un palier intermédiaire correspondant à une valeur réduite V(x) du premier paramètre au lieu de poursuivre jusqu'à $V'$.

Le terme "angle" désigne aussi bien un angle vif qu'un arrondi dont le rayon de courbure est de l'ordre de grandeur du rayon du fil-électrode. Il désigne un changement de direction avec ou sans rayon de raccordement.

Les endroits de la trajectoire où l'automatisme faisant l'objet de la présente invention doit être mis en oeuvre sont déterminés par une unité de calcul programmée de manière appropriée et agencée pour émettre un premier signal actionnant le début de cet automatisme, c'est-à-dire l'arrêt du mouvement relatif fil-pièce , puis un deuxième signal lorsque le fil aura parcouru une longueur $l_o$ de la trajectoire en usinant avec le premier paramètre réduit à la valeur $V'$ ou V(x). Ce deuxième signal actionnera le début des augmentations successives de régime. Le calcul de $l_o$ sera différent dans le cas d'un arc ou d'un angle.

Selon une variante préférée,

- dans le cas d'un angle $\alpha$, l'unité est programmée pour calculer $l_o$ comme étant égale à

$$l_o = \frac{\text{rayon du fil R + gap g}}{\text{tg } \alpha/2} \quad ;$$

- dans le cas d'un arc de rayon de courbure r, cette unité de calcul est programmée pour calculer $l_o$ comme étant égale à

$l_o = \tau \cdot r$

$\tau$ étant l'angle exprimé en radians, correspondant à cet arc.

Ainsi, $l_o$ ne dépend que de la géométrie et du diamètre du fil et non de la matière des électrodes et de l'épaisseur de la pièce.

4

La détermination de $l_0$ et l'émission des signaux vers la commande numérique afin d'actionner les variations progressives de régime à la fin de chaque intervalle $\Delta t_x$ sont effectuées par l'unité de calcul sans intervention d'un programmeur. Cette unité analyse la trajectoire mise en mémoire (en étant programmée en particulier pour suivre l'évolution du rayon de courbure de cette trajectoire) et effectue des calculs simples, comme ceux indiqués ci-dessus à titre d'exemple.

L'invention sera illustrée ci-dessous par l'une des réalisations possibles, décrite uniquement à titre d'exemple, mais sans être limitée à celle-ci.

La figure 2 schématise une machine EDM à fil munie d'un dispositif selon la prtésente invention.

Selon cet exemple, on agit sur la fréquence des impulsions.

On a déterminé expérimentalement que la géométrie est satisfaisante et que les courts-circuits sont évités dans un angle pour une fréquence réduite $F(X) = F/8$, F étant la fréquence des impulsions du régime d'usinage nominal, c'est-à-dire du régime utilisé pour usiner avant d'aborder cet angle ou un arc de faible rayon de courbure. On a également déterminé expérimentalement qu'il faut procéder au moins par 4 diminutions successives pour passer de la fréquence nominale F à la fréquence réduite F/8 afin de découper un angle avec une géométrie satisfaisante.

On a aussi déterminé expérimentalement (et mémorisé en général soit sur l'élément 17 du support d'information 16 de la machine EDM, soit sur l'un des supports portant les tables technologiques et pouvant être introduits de manière interchangeable dans la commande numérique) la relation entre le rayon de courbure r d'un arc et la valeur de la fréquence réduite F(x) correspondante, ou le nombre n de variations élémentaires, selon le tableau suivant :

| r en mm | F(x) | n | |
|---|---|---|---|
| 0 | $F(X) = F/8$ | 0 | |
| $0 < r \leq 0,25$ | $F(X) + Q4 = F/4$ | 3 | $Q4 = F/8$ |
| $0,25 < r \leq 0,75$ | $F(X) + Q3 + Q4 = F/2$ | 2 | $Q3 = F/4$ |
| $0,75 < r \leq 1$ | $F(X) + Q2 + Q3 + Q4 = 3F/4$ | 1 | $Q2 = F/4$ |
| $1 < r$ | $F(X) + Q1 + Q2 + Q3 + Q4 = F$ | 0 | $Q1 = F/4$ |

La durée des paliers utilisés pour cette diminution est constante. Elle dépend en particulier de la hauteur H de la pièce, selon le tableau suivant :

| H mm | 5 | 10 | 20 | 30 | 40 | 50 | 60 | 70 | 80 | 90 | 100 |
|---|---|---|---|---|---|---|---|---|---|---|---|
| $\Delta t$ s | 0,25 | 0,5 | 1 | 1,5 | 2 | 2,5 | 3 | 3,5 | 4 | 4,5 | 5 |

| H mm | 110 | 120 | 130 | 140 | 150 | 160 |
|---|---|---|---|---|---|---|
| $\Delta t$ s | 5,5 | 6 | 6,5 | 7 | 7,5 | 8 |

Dans cet exemple où la pièce a 80 mm de hauteur, on a donc choisi $\Delta t = 4$ secondes.

Les durées $\Delta t'$ des paliers observées pour augmenter la fréquence après avoir parcouru la distance $l_0$ correspondent au temps mis par le fil pour usiner une même longueur $\Delta l$ de trajectoire pendant chacun de ces paliers. Ces longueurs $\Delta l$ (et ces durées $\Delta t'$) sont, elles aussi, fonction de la hauteur H de la pièce, selon le tableau suivant:

| H mm | < 10 | 10 | 20 | 30 | 40 | 50 | 60 | 70 | 80 | > 80 |
|------|------|----|----|----|----|----|----|----|----|------|
| $\Delta 1$ $\mu$m | 50 | 60 | 60 | 70 | 70 | 80 | 80 | 100 | 100 | 100 |

Dans cet exemple où la pièce a 80 mm de hauteur, on aura donc des durées $\Delta t'$ telles que $\Delta l = 100$ $\mu$m

Décrivons d'abord l'usinage d'un angle : le fil qui usine la pièce avec un régime tel que la fréquence f des impulsions a la valeur F arrive au sommet d'un angle ( c'est à dire que la ligne idéale joignant les deux guides-fil arrive à ce sommet); l'élément 20 de l'unité de calcul 14, programmé dans ce but,
- envoie un signal A à l'unité de contrôle 18 de la commande numérique 9 qui arrête alors le mouvement relatif fil-pièce,
- et enclenche le circuit 50; ce dernier envoie un premier signal vers l'unité 19 de la commande numérique 9 qui est programmée de façon à actionner une première diminution $Q_1 = F/4$ de la fréquence f, et émet ensuite un nouveau signal toutes les 4 secondes, grâce à l'élément 17 (sur lequel cette durée $\Delta t = 4$ secondes avait été mémorisée), et auquel il est relié par l'intermédiaire de l'élément 20. Ce nouveau signal vers l'élément 19 provoque la décrémentation de la fréquence f de la quantité $Q_2 = F/4$ (palier 1).
On décrémente ainsi successivement la fréquence f des quantités $Q_3 = F/4$ et $Q_4 = F/8$ afin d'obtenir une fréquence égale à $F/8$, donc, dans cet exemple, après avoir effectué 4 variations élémentaires de fréquence, en observant 3 paliers de même durée c'est-à-dire de 4 secondes.
Cette diminution de régime ainsi réalisée, l'élément 20 envoie un signal à l'unité 18 de la commande numérique qui actionne le parcours du segment $l_0$ de trajectoire à régime réduit.
La machine EDM utilisée dans cet exemple est équipée d'un circuit de régulation automatique intégré, permettant d'asservir la vitesse du mouvement relatif fil-pièce sur les nouvelles conditions dues à la modification de la fréquence des impulsions. Donc la vitesse à laquelle le fil va parcourir $l_0$ est fixée automatiquement.
Lorsque le fil a parcouru la distance $l_0$ calculée comme indiquée ci-dessus, l'unité de calcul envoie alors un signal à l'élément de commande numérique 19 afin que celui-ci actionne une première augmentation $Q_1 = F/8$ de la fréquence après avoir usiné une longueur $\Delta l = 100$ $\mu$m de la trajectoire.
Comme décrit ci-dessus pour la diminution de fréquence on opère de manière inverse : on augmente trois fois la fréquence d'une quantité égale à $F/4$, en attendant que le fil ait usiné une longueur de 100 $\mu$m entre deux augmentations successives, donc, dans cet exemple, en observant encore 2 paliers. On ramène ainsi la fréquence à sa valeur F initiale.
Décrivons maintenant l'usinage d'un arc.
L'arc en question a un rayon de courbure de 1,26 mm. On procède de la même façon que ci-dessus, en décrémentant puis en incrémentant la fréquence des impulsions des quantités $Q_1$, $Q_2$ et $Q_3$ en 3 variations successives (d'après le tableau donnant la relation entre le rayon de courbure et la fréquence réduite), afin de réduire la fréquence à $F(X) = F/4$ en observant donc 2 paliers de 4 secondes. Cette relation qui est déjà mémorisée sur l'élément 17, a aussi permis à l'élément 20 de l'unité de calcul 14 de sélectionner automatiquement une valeur appropriée pour la fréquence réduite $F(X)$, et d'envoyer les signaux correspondants au nombre de paliers voulus. Les quantités $Q_1$ à $Q_4$ indiquées ci-dessus dans le cas d'un angle restent les mêmes. A la fin du dernier palier, avant de remettre en marche le mouvement relatif pièce-fil, l'élément 20 de l'unité de calcul 14 envoie à l'élément 19 de la commande numérique un signal pour actionner le parcours à régime réduit.
Selon une variante, on réduit la fréquence F dans le cas d'un angle à $F(X) = F/16$, en procédant par 4 diminutions successives, avec $Q_1 = F/2$, $Q_2 = F/4$, $Q = F/8$ et $Q_4 = F/16$, donc en diminuant la fréquence f de moitié après chaque palier. De même, pour la ramener à sa valeur F initiale, on double la fréquence après chaque palier.
Un avantage de la présente invention est la simplification qu'elle apporte, tant du point de vue de l'appareillage que de la programmation. Il n'est plus nécessaire de réguler la distance d'étincelage suite aux variations imposées à la fréquence des impulsions, comme le demandait, par exemple, l'usinage décrit dans CH 654.233. De plus, le logiciel correspondant à un variation en usinage stationnaire est beaucoup plus simple que celui necéssité par la stratégie du brevet CH 654.233 ou il fallait prévoir une variation de paramètre avant le changement de direction , appropriée pour diminuer suffisamment la flèche du fil. Les procédures automatiques de variation de paramètre selon la présente invention sont aussi beaucoup plus simples que celles exposés dans l'état de la technique, par exemple dans EP 67 876 : détection de la flèche du fil et de la largeur de la fente découpée (gap) (nécessitant un arrêt de l'usinage) et calcul d'une vitesse réduite selon une formule faisant intervenir le rayon de courbure, le gap et cette flèche, cette dernière dépendant du type de fil, de l'épaisseur de la pièce, de la distance entre les guides-fil, de la pression d'injection, de la puissance du courant d'usinage, de la tension mécanique du fil, etc... Les procédures selon la présente invention ne nécessitent aucun arrêt de l'usinage et aucun circuit spécial avec senseurs permettant de mesurer la flèche et le gap. Elles sont indépendantes de la plupart de ces facteurs, en particulier de la flèche du fil. Elles ne font pas intervenir la variation de la vitesse d'avance. Elles ne font pas appel à une correction de la trajectoire mise en mémoire afin de compenser les défauts de géométrie dues à cette flèche.

La présente invention peut être utilisée non seulement pour faire varier les conditions d'usinage de manière à usiner un angle ou un arc avec un régime d'usinage approprié, mais aussi pour arrêter ou reprendre un usinage dans le cas, par exemple, d'un arrêt volontaire ou d'une baisse de régime suite à l'apparition d'un risque de rupture ou de courts-circuits. Elle permet en particulier d'éviter les courts-circuits au redémarrage d'un usinage.

**Revendications**

1. Dispositif pour une machine de découpage par électroérosion avec un fil-électrode (1) et comportant un générateur (30) connecté entre les deux électrodes (1,2) et émettant des impulsions de tension, une commande numérique (9, 14, 16, 18) des déplacements relatifs entre la pièce (1) et les guides-fil (3,4) et des caractéristiques des impulsions émises par le générateur (30), ce dispositif comportant
- une unité de calcul (20) programmée pour déterminer les endroits de la trajectoire où doit être enclenchée la variation d'au moins un paramètre agissant sur les conditions d'usinage et agencée pour envoyer les signaux correspondant à un élément de commande numérique (19),
- un organe (50) comportant un circuit de temporisation agencé pour émettre, à intervalles de temps prédéterminés, un signal vers cet élément de commande numérique (19) , ceci à partir de l'enclenchement de la variation du paramètre,
- un élément de commande numérique (19) relié à cette unité de calcul (20) et à cet organe (50), destiné à actionner la variation par paliers de ce(s) paramètre(s) en réponse à ces signaux et à arrêter la procédure de variation lorsque le paramètre a atteint la valeur finale désirée ou est revenu à sa valeur initiale, ou lorsqu'un nombre prédéterminé de paliers a été effectué ou lorsque cette variation a débuté depuis un laps de temps donné, ainsi que
- des moyens reliés à cet élément de commande numérique (19) et agencés pour faire varier ce(s) paramètre(s) de quantités données.

2. Dispositif selon la revendication 1, dans lequel la durée de chacun des paliers définis par l'organe (50) comportant un circuit de temporisation varie selon une fonction prédéterminée ou est égale à une constante prédéterminée.

3. Dispositif selon la revendication 1, dans lequel l'élément de commande numérique (19) est agencé pour commander la variation de la fréquence des impulsions de tension émise par le générateur (30).

4. Dispositif selon la revendication 1, dans lequel l'élément de commande numérique (19) est agencé pour diminuer le paramètre , à la fin de chaque palier, de quantités dont la valeur décroît au fur et à mesure que cette diminution progresse, et inversément, pour faire augmenter le paramètre de quantités successives de valeur croissante.

5. Dispositif selon la revendication 1, dans lequel l'élément de commande numérique (19) est agencé pour faire diminuer de moitié ou augmenter du double la valeur du paramètre d'usinage en réponse à l'un des signaux émis par l'organe (50) comportant un circuit de temporisation.

6. Dispositif selon la revendication 1, comportant également un organe agencé pour envoyer un signal vers l'élément de commande numérique dés que le fil-électrode a découpé une longueur prédéterminée depuis un endroit donné de la trajectoire ou depuis un moment donné.

7. Procédé de commande d'une machine à découper par électroérosion avec un fil-électrode (1) et selon une trajectoire prédéterminée, pour faire varier au moins un paramètre V d'usinage jusqu'à une valeur finale V' lorsque le fil-électrode atteint le sommet d'un angle ou aborde un arc, puis pour ramener cette valeur V' à sa valeur initiale V à la fin de la coupe de l'angle ou de l'arc, caractérisé par les étapes suivantes :
- calcul des endroits de la trajectoire où doivent être enclenchées ces variations,
- arrêt du mouvement relatif entre le fil-électrode (1) et la pièce (2) à usiner lorsque le fil (1) atteint l'un de ces endroits,
- variation de la valeur d'au moins un paramètre d'une quantité $Q_1$ prédéterminée,
- au bout d'une durée prédéterminée $\Delta t_1$, nouvelle variation de la valeur du paramètre d'une quantité $Q_2$ prédéterminée, ce mode de variation étant poursuivi par paliers de durées prédéterminées $\Delta t_x$ jusqu'à la

valeur finale V' désirée ou jusqu'à ce qu'un nombre prédéterminé de paliers aient été effectués ou pendant un laps de temps donné,

- reprise du mouvement relatif entre le fil-électrode (1) et la pièce (2) , ce mouvement étant commandé selon la valeur V' atteinte par le paramètre,

- lorsque le fil atteint l'endroit suivant prédéterminé selon la première étape, début d'une variation d'au moins un paramètre en sens inverse, par paliers successifs de durées Δt' prédéterminées, ou correspondant à la découpe de longueurs Δl prédéterminées, jusqu'à ce que le paramètre ait atteint sa valeur V initiale ou qu'un nombre prédéterminé de paliers aient été effectués ou pendant un laps de temps prédéterminé, ou jusqu'à ce qu'une longueur prédéterminée 1 ait été découpée.

8. Procédé selon la revendication 7, dans lequel les durées $\Delta t_x$ et/ou $\Delta t'_x$ ont toutes la même valeur.

9. Procédé selon la revendication 7, dans lequel l'étape de calcul comprend une opération arithmétique qui consiste à déterminer la distance $l_o$ parcourue en maintenant chaque paramètre à sa valeur finale V' , comme étant égale à

$$1_o = \frac{R + g}{tg\ \alpha/2}$$

R étant le rayon du fil, g la distance d'étincelage et $\alpha$ la valeur de l'angle à découper.

10 Procédé selon la revendication 7, dans lequel l'étape de calcul comprend une opération arithmétique qui consiste à déterminer la distance $l_o$ parcourue en maintenant chaque paramètre V à sa valeur finale V' , comme étant égale à

$l_o = \tau \cdot r$

$\tau$ étant la valeur en radians de l'angle correspondant à l'arc à découper, et r étant le rayon de courbure de cet arc.

Fig. 1

*Fig. 2*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | GB-A-2169536 (AMADA CO) <br> * page 3, lignes 41 - 113 * <br> ----- | 1 | B23H7/04 <br> B23H7/06B |

|  |  |  | **DOMAINES TECHNIQUES RECHERCHES (Int. Cl.5 )** |
|---|---|---|---|
|  |  |  | B23H |

Le présent rapport a été établi pour toutes les revendications

| Lieu de la recherche | Date d'achèvement de la recherche | Examinateur |
|---|---|---|
| LA HAYE | 19 MARS 1990 | DAILLOUX C. |